Europäisches Patentamt

European Patent Office

Office européen des brevets

(11) Veröffentlichungsnummer : **0 117 291**
**B1**

(12) # EUROPÄISCHE PATENTSCHRIFT

(45) Veröffentlichungstag der Patentschrift :
**15.04.87**

(21) Anmeldenummer : **83111485.5**

(22) Anmeldetag : **17.11.83**

(51) Int. Cl.⁴ : **F 16 P  5/00**, F 16 B 31/02,
F 16 H 35/10, B 23 Q  5/58

(54) Vorrichtung an Bearbeitungsmaschinen zum Vermeiden von Schäden.

(30) Priorität : 29.01.83 DE 3303025

(43) Veröffentlichungstag der Anmeldung :
05.09.84 Patentblatt 84/36

(45) Bekanntmachung des Hinweises auf die Patenterteilung : 15.04.87 Patentblatt 87/16

(84) Benannte Vertragsstaaten :
AT CH FR GB IT LI NL SE

(56) Entgegenhaltungen :
DE-B- 2 934 547
DE-C-   584 023
FR-A- 2 193 657
GB-A- 1 202 067
US-A- 3 714 859

(73) Patentinhaber : **M.A.N.-ROLAND Druckmaschinen
Aktiengesellschaft
Christian-Pless-Strasse 6-30
D-6050 Offenbach/Main (DE)**

(72) Erfinder : **Schilling, Konrad
Senefelderstrasse 33
D-6050 Offenbach/Main (DE)**

(74) Vertreter : **Marek, Joachim, Dipl.-Ing.
c/o M.A.N.-ROLAND Druckmaschinen A.G. Patentabteilung Postfach 529 u. 541 Christian-Pless-Strasse 6-
30
D-6050 Offenbach/Main (DE)**

## Beschreibung

Die Erfindung betrifft eine Vorrichtung an Bearbeitungsmaschinen zum Vermeiden von Schäden, insbesondere am Spindelende im Bereich eines Antriebsmotors, wobei sich im Schädenfall eine Befestigungsplatte vom Gestellrahmen der Bearbeitungsmaschine löst, mit einer in der Befestigungsplatte vorgesehenen Bohrung die größer ist als ein Schraubenkopf einer Befestigungsschraube, welche mit dem Gestellrahmen verbunden ist und mit einer zwischen der Befestigungsplatte und dem Schraubenkopf angeordneten Unterlegscheibe mit großer Steifigkeit die als Sollbruchstelle wirkt.

Derartige Vorrichtungen zur Sicherung von Lagergehäusen sind durch die GB-A-1 202 067 bekannt.

Durch die US-A-3 714 859 sind Befestigungsmittel bekannt, die bei Erreichen einer Grenzspannung nachgeben. Dazu sind Dehnschrauben mit im Durchmesser sich erweiterndem Schaft vorgesehen, der in eine vorgeschaltete Abstandshülse beim Nachgeben der Befestigung eindringt und diese aufreißt.

Fehlbedienungen an Maschinen können durch menschliches Versagen oder durch fehlgeschaltete NC-Steuerungen auftreten. Mutwillige Fehlbedienungen an Bearbeitungsmaschinen sind auch schon vorgekommen. Die Auswirkungen nach den Fehlbedienungen bzw. Fehlschaltungen, können je nach Maschinentyp und -art der Fehlbedienung unterschiedlich ausfallen, d. h. die daraus resultierenden Maschinenschäden können unterschiedlich groß sein. Weiterhin ziehen die unterschiedlichsten Maschinenunfälle auch ein breites Spektrum an Folgeschäden nach sich.

So können z. B. bei einem Kollisionsfall an großen Bearbeitungszentren Reparaturzeiten von 6 bis 7 Wochen auftreten, was neben dem Ausfall der Produktion auch erhebliche Reparaturkosten mit sich bringt. Bei den maschinenherstellenden Firmen hat man nun versucht mittels Kupplungen im Bereich des Antriebs die Folgen der Kollisionsunfälle zu verringern bzw. auszuschalten. Es hat sich aber herausgestellt, daß diese Kupplungen zu langsam ansprechen und dadurch die vorhandenen Energien im Kollisionsfall nicht optimal innerhalb der Maschine aufgenommen werden können.

Weiterhin sind Wärmeelemente für den Motor, in Form von Bimetall-Überlastsicherungen bekannt, die ziemlich genau einstellbar sind. Auch diese sind im jeweiligen Kollisionsfall zu langsam, da der Motor erst abgeschaltet wird, wenn die Bewegungsenergie innerhalb der Maschine sehr groß ist.

Einen anderen Lösungsweg um Reparaturkosten bzw. -zeiten zu sparen, erkennt man in der DE-B-2 934 547, in der eine Schraube, insbesondere für Gewindesacklöcher angegeben ist, die aus einem Schaft und Kopf besteht, wobei dieser zum Ansetzen eines Schlüssels besonders geformt ist. Das wesentliche dieser Lösung besteht darin, daß eine in einem Gewindesackloch abgebrochene Schraube, nach dem Abbrechen des Kopfes, an einem speziell ausgeformten Schaft mittels einer Zange heraus gedreht werden kann, ohne Bohren zu müssen.

Ausgehend von diesem Stand der Technik liegt der Erfindung die Aufgabe zugrunde, eine Vorrichtung anzugeben, die eine Schadensminderung nach einem Kollisionsfall an der fehlbedienten Bearbeitungsmaschine und damit eine Verkürzung der Reparaturzeit und -kosten ermöglicht.

Die Lösung der gestellten Aufgabe wird bei einer Vorrichtung der eingangs genannten Art durch die Merkmale des Kennzeichens des Anspruchs 1 erreicht.

Eine Bohrung in einer Befestigungsplatte ist größer als ein Schraubenkopf einer Befestigungsschraube, welche mit einem Gestellrahmen der Bearbeitungsmaschine verbunden ist. Bei einem Kollisionsfall wird durch den sofort eintretenden Bewegungsablauf zwischen den beteiligten Teilen automatisch vermieden, daß sich große Kräfte innerhalb der Bearbeitungsmaschine aufbauen können. D. h., da der Kopfdurchmesser kleiner ist als der Bohrungsdurchmesser kann der Schraubenkopf durch die Bohrung hindurch gleiten, ohne daß sich aus der translatorischen Restenergie große unkontrollierte Haltekräfte zwischen der Befestigungsplatte und dem Gestellrahmen der Bearbeitungsmaschine aufbauen können.

Zwischen Bohrung und Befestigungsschraube ist mindestens eine Unterlegscheibe großer Steifigkeit angeordnet. Während eines Kollisionsfalles bricht die Unterlegscheibe bei einer definierten Krafteinwirkung, so daß sich die oben genannten großen Haltekräfte nicht aufbauen können. Die Unterlegscheibe wirkt damit als Sollbruchstelle und ist so ausgelegt, daß normale Kräfte, die aus der Bearbeitung hervorgehen, ohne Schwierigkeiten übertragen werden können, ohne daß die Sollbruchstelle bereits vorher anspricht.

Bei einem Kollisionsfall durch Fehlbedienung fährt das Werkzeug z. B. in axialer Richtung der Spindel auf ein Werkstück auf. Der Kraftverlauf wirkt über die Spindel bis ans Spindelende bzw. deren Lagerung im Bereich des Spindelendes. Zur Halterung der Lagerung ist die oben genannte Befestigungsplatte mittels der durch Sollbruchstelle gesicherten Befestigungsschrauben mit dem Gestellrahmen der Bearbeitungsmaschine verbunden. Durch den Kollisionsfall löst sich die Befestigungsplatte vom Gestellrahmen und vermeidet dadurch den extrem großen Aufbau von Haltekräften innerhalb der Bearbeitungsmaschine. Auf diese einfache Weise wird verhindert, daß die betroffenen Maschinenteile kurz nach dem Kollisionsfall extremen Zerstörungen unterworfen werden. Dies ist für die nachfolgenden Reparaturarbeiten und deren Zeitaufwendung besonders vorteilhaft, denn bei der Reparatur müssen nicht erst völlig demolierte und ineinander verkeilte Maschinenteile durch aufwendige Stemmarbeiten voneinander getrennt werden. Die Sprödbrucheigenschaften der Unterlegscheibe können durch verschiedene Materialien unterschiedlich gewählt werden. Durch Veränderung der Anzahl der Unterlegscheiben kann die Sollbruchgrenzkraft beliebig verändert werden.

In der erfindungsgemäßen Ausführung sind zusätzliche energieverzehrende Teile im Bereich der Sollbruchstelle angeordnet. Dies sind z. B. Kupferrohre bzw. -hülsen die während des Kollisionsfalles aufgedornt werden. Das Aufdornen bzw. Aufweiten der Kupferrohre führt zu einem extremen Energieabbau während und nach dem Kollisionsfall. Die Knautschzonenlänge der Kupferrohre kann je nach den auftretenden bzw. berechneten Kollisionskräften unterschiedlich lang gewählt werden. Hierbei ist die Länge der Hülse und die Materialverformbarkeit bzw. -zähigkeit ein Maß für den Energieabbau der gesamten Vorrichtung. Bei großen Bearbeitungsmaschinen können z. B. in 10 μ-Sec. ca. 38 Tonnen translatorische Energie während eines Kollisionsfalles auftreten. Unterlegscheiben in 3 mm Stärke aus Pertinax weisen Werte um 3,6 Kp/μ, GG 20 um 11,2 Kp/μ auf, Keramikscheiben sind noch steifer und die Werte entsprechend größer. Die Sollbruchstelle mit den Unterlegscheiben in Pertinaxausführung ist somit auf ca. 2.200 Kp ausgelegt. Ist die Krafteinwirkung auf die Sollbruchstelle größer als 2.200 Kp, dann bricht die Sollbruchstelle.

Um die oben genannte kinetische Energie abbauen zu können, ist ein Bremsweg von ca. 38 mm vorgesehen. Auf der Länge dieses Bremsweges wird die innen liegende, weich verformbare Kupferhülse energieaufnehmend verformt. Die Knautschzonenlänge kann bei höheren Kräften als den oben genannten, beliebig verlängert werden.

In einer weiteren besonders vorteilhaften Ausführung wirkt nach dem Brechen der Sollbruchstelle die verlängerte Schraube als Aufhängung des freibeweglich gewordenen Maschinenteiles.

Als zusätzliche Sicherung kann die Unterlegscheibe mit einer elektrischen Absicherung versehen sein. Diese schaltet beim Bruchfall den Antriebsmotor automatisch aus.

Eine andere Ausführung der elektrischen Sicherung kann in Form eines Mikroschalters, welcher zwischen den sich voneinander nach einem Kollisionsfall trennenden Teilen angeordnet ist, gewählt werden. Der Mikroschalter schaltet die translatorische Antriebsbewegung aus.

Weitere Merkmale und Vorteile der Erfindung gehen aus den Unteransprüchen und der nachfolgenden Figurenbeschreibung in Verbindung mit den schematisch im Schnitt gezeigten Figuren hervor.

Es zeigt :

Figur 1 den montierten Zustand der Sollbruchstelle an einer Bearbeitungsmaschine im Bereich der Befestigunsplatte und des Gestellrahmens mit Unterlegscheiben (vgl. GB-A-1.202.067),

Figur 2 die gleiche Position an der Bearbeitungsmaschine wie in der Fig. 1 nach einem Kollisionsfall und dem Bruch der Unterlegscheibe,

Figur 3 eine justierbare Halterung gemäß der Erfindung die nach einem Kollisionsfall montierbar ist und aus zusätzlichen Befestigungsplatten und energieverzehrenden Bauteilen zusammengesetzt ist.

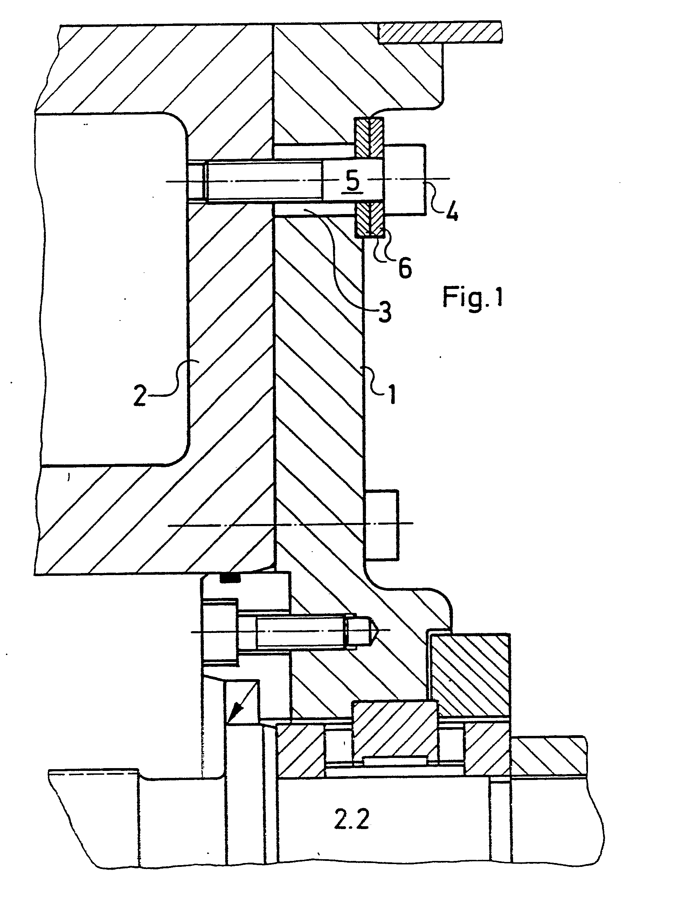

Die Fig. 1 zeigt die Sollbruchstelle einer Bearbeitungsmaschine im Bereich einer Befestigungsplatte 1 an einem Gestellrahmen 2 der Bearbeitungsmaschine. Diese Anordnung ist ähnlich wie diese bekannt aus GB-A-1.202.067. Die Befestigungsplatte 1 wirkt als Lagerung für eine Bearbeitungsspindel 2.2 der Bearbeitungsmaschine. In der Befestigungsplatte 1 ist eine Bohrung 3 angeordnet deren Durchmesser größer ist als ein Schraubenkopf 4 einer Befestigungsschraube 5. Zwischen dem Schraubenkopf 4 und Befestigungsplatte 1 sind Unterlegscheiben 6 angeordnet. Die Unterlegscheiben 6 sind aus einem Material mit Sprödbrucheigenschaften gefertigt, damit in einem Kollisionsfall die Unterlegscheiben 6 eine saubere kantige Bruchstelle aufweisen. Die Anzahl der Unterlegscheiben 6 kann entsprechend den berechneten Kollisionskräften und der Anzahl der Befestigungsschrauben 5 und im Bereich der Sollbruchstelle unterschiedlich gewählt werden.

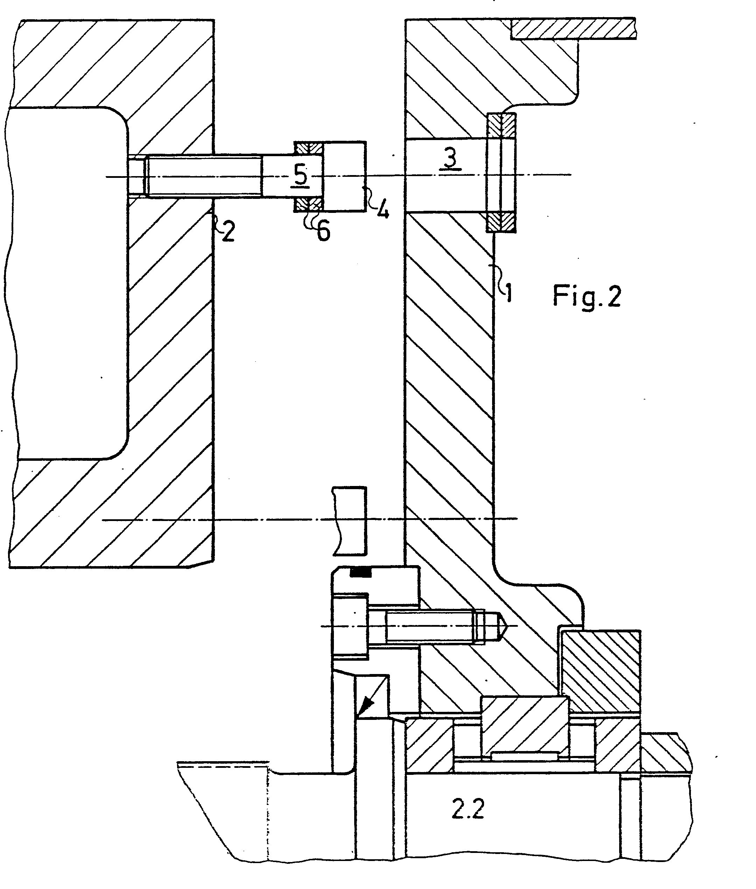

Die Fig. 2 zeigt die Sollbruchstelle an einer Bearbeitungsmaschine nach einem Kollisionsfall. Hierbei hat sich die Befestigungsplatte 1 vom Gestellrahmen 2 um eine Wegdifferenz entsprechend der aufgetretenen Kollisionskräfte nach dem Bruch der Unterlegscheiben 6 entfernt. Die Kraftübertragung erfolgt hierbei über die Bearbeitungsspindel 2.2 auf die Befestigungsplatte 1. In der Fig. 2 wird deutlich erkennbar, daß außer dem Bruch der Unterlegscheiben 6 keine zerstörten Teile an der Bearbeitungsmaschine auftreten. Die Reparatur beschränkt sich lediglich darauf die Befestigungsschrauben 5 herauszudrehen und die zerstörten Unterlegscheiben 6 zu entfernen. Ein leichtes Zusammenbauen der Sollbruchstelle und eine minimale Reparaturzeit ist damit unter einfachsten Bedingungen möglich.

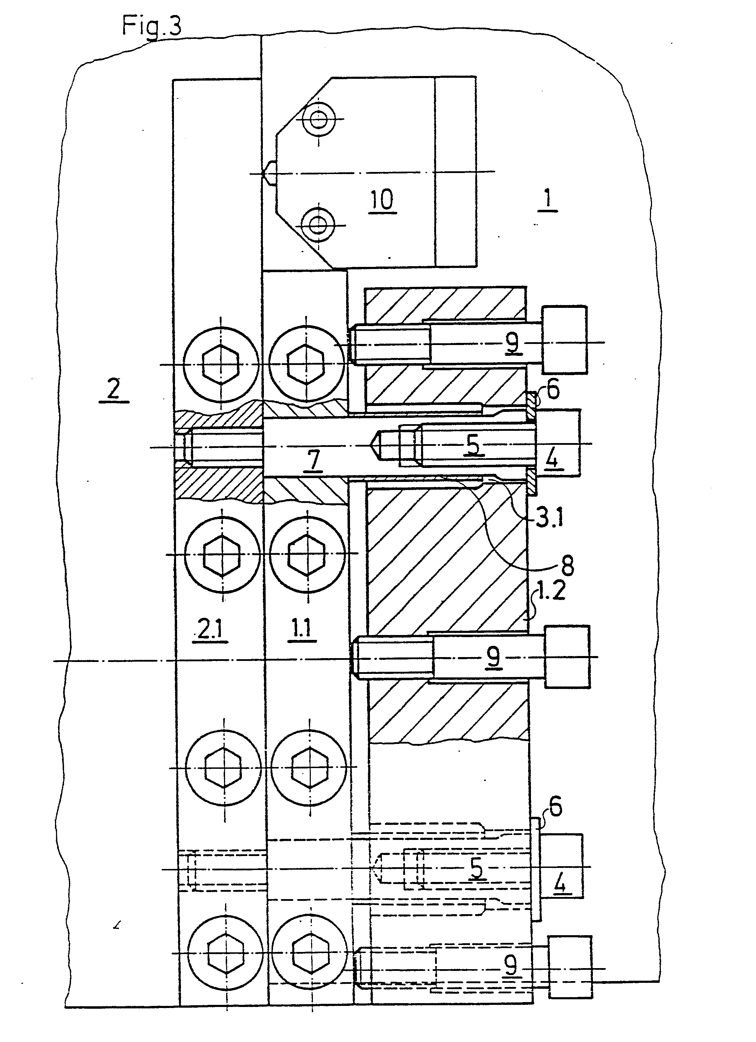

Fig. 3 zeigt eine erfindungsgemäße Ausführung einer Sollbruchstelle an einer Bearbeitungsmaschine, an der Schon einmal ein Kollisionsfall aufgetreten ist. In diesem Fall kann auf den Gestellrahmen 2 der Bearbeitungsmaschine eine Gestellrahmenleiste 2.1 aufgeschraubt werden. Auf der Gegenseite der Trennstelle ist eine zusätzliche Befestigungsplatte 1.1 auf der Befestigungsplatte 1 verschraubt. Durch die Befestigungsplatte 1.1 sind Distanzbolzen 7 hindurch geführt, welche auf der Gestellrahmenleiste 2.1 verschraubt sind. Auf die Distanzbolzen 7 sind Kupferhülsen 8 aufgezogen. Die Kupferhülsen 8 liegen eng um die Distanzbolzen 7 an und stehen fest auf der Befestigungsplatte 1.1 auf. Am freien Ende der Kupferhülsen 8 weiten sich die Distanzbolzen 7 in abgeschrägter Weise auf. In die Distanzbolzen 7 sind an ihren freien Enden die Befestigungsschrauben 5 verschraubt. Zwischen dem Schraubenkopf 4 der Befestigungsschraube 5 und dem Ende der Distanzbolzen 7 sind die Unterlegscheiben 6 verschraubt. Die Unterlegscheiben 6 liegen auf einer Befestigungsplatte 1.2 auf. Die Befestigungsplatte 1.2 kann mit Justierschrauben 9 in ihrer Höhe beliebig zur Befestigungsplatte 1.1 justiert werden. In einem Kollisionsfall liegt die Trennungsebene zwischen der Befestigungsplatte 1 und dem Gestellrahmen 2 bzw. der Befestigungsplatte 1.1 und der Gestellrahmenleiste 2.1. Die Befestigungsplatte 1.1 gleitet im Kollisionsfall geführt durch die Distanzbolzen 7 nach dem Bruch der Unterlegscheiben 6 entlang der Distanzbolzen 7. Die Befestigungsplatte 1.1 schiebt bei dieser Bewegung die Kupferhülsen 8 ebenfalls entlang der Distanzbolzen 7 zu deren Enden hin. Da die Distanzbolzen 7 an ihren Enden aufgeweitet sind, werden die Kupferhülsen 8 an diesen aufgedornt. Während des Aufdornens wird die Bewegungsenergie des Kollisionsfalles abgebremst. An der Befestigungsplatte 1.1 ist zusätzlich ein Mikroschalter 10 befestigt, der im Kollisionsfall den translatorischen Antrieb elektrisch ausschaltet. Die Justierschrauben 9 können in besonders vorteilhafter Weise die Befestigungsplatte 1.2 zu allen Unterlegscheiben 6 auch bei vorhandenen Unebenheiten justieren.

## Patentansprüche

1. Vorrichtung an Bearbeitungsmaschinen zum Vermeiden von Schäden, insbesondere am Spindelende (2.2) im Bereich eines Antriebsmotors, wobei sich im Schädenfall eine Befestigungsplatte (1.2) vom Gestellrahmen (2) der Bearbeitungsmaschine löst, mit einer in der Befestigungsplatte (1.2) vorgesehenen Bohrung (3.1) die größer ist als ein Schraubenkopf (4) einer Befestigungsschraube (5), welche mit dem Gestellrahmen (2) verbunden ist und mit einer zwischen der Befestigungsplatte (1.2) und dem Schraubenkopf (4) angeordneten Unterlegscheibe (6) mit großer Steifigkeit die als Sollbruchstelle wirkt, dadurch gekennzeichnet, daß ein Distanzbolzen (7) an dem Gestellrahmen (2) verschraubt ist und durch die Bohrung (3.1) der Befestigungsplatte (1.2) geführt ist, daß eine Kupferhülse (8) auf den Distanzbolzen (7) aufgezogen ist und an dem Gestellrahmen (2) abgestützt ist, daß am freien Ende der Kupferhülse (8) der Distanzbolzen (7) abgeschrägt aufgeweitet ist und daß die Unterlegscheibe (6) mit der Befestigungsschraube (5) auf dem Distanzbolzen (7) verschraubt ist.

2. Vorrichtung nach Anspruch 1, dadurch gekennzeichnet, daß die Befestigungsplatte (1.2) mit Justierschrauben (9) an einer zusätzliche Befestigungsplatte (1.1) abstützbar ist.

3. Vorrichtung nach Anspruch 1, dadurch gekennzeichnet, daß die Kupferhülse (8) eng um den Distanzbolzen (7) angeordnet ist.

4. Vorrichtung nach Anspruch 1 und 3, dadurch gekennzeichnet, daß die Länge der Kupferhülse (8) einer Aufdornkraft von 650 Kp entspricht.

## Claims

1. Device on treatment machines for avoiding damage, particularly at the shaft ends (2.2) in the region of a drive motor, wherein in the case of damage a fixture plate (1.2) releases from the frame (2) of the treatment machine, with a bore (3.1) provided in the fixing plate (1.2) which is larger than a bolt head (4) of a fixing bolt (5) which is connected with the machine frame (2) and with a support disc (6) arranged between the fixing plate (1.2) and the bolt head (4) with substantial stiffness which operates as a desired fracture point, characterized in that a distance bolt (7) is screwed onto the machine frame (2) and guided through the bore (3.1) of the fixing plate (1.2), that a copper sheath (8) is drawn onto the distance bolt (7) and supported on the machine frame (2), that at the free end of the copper sheath (8) the distance bolt (7) is obliquely broadened and that the support disc (16) is bolted onto the distance bolt (7) by the fixing bolt (5).

2. Device according to claim 1 characterized in that the fixing plate (1.2) can be supported with adjustable adjustment bolts (9) on an additional fixing plate (1.1).

3. Device according to claim 1 characterized in that the copper sheath (8) is arranged closely around the distance bolt (7).

4. Device according to claim 1 and 3 characterized in that the length of the copper sheath (8) corresponds to a mandrelling out force of 650 Kp.

## Revendications

1. Dispositif pour machines-outils pour éviter des dommages, en particulier pour tête de broche (2.2) dans la zone d'un moteur d'entraînement, par quoi, dans le cas de dommages, une plaque de fixation (1.2) se détache du châssis de support (2) de la machine-outil, comportant un alésage (3.1), prévu dans la plaque de fixation (1.2), qui est plus grand qu'une tête de vis (4) d'une vis de fixation (5), laquelle est reliée au châssis de support (2), et une rondelle (6), disposée entre la plaque de fixation (1.2) et la tête de vis (4), ayant une grande rigidité et qui sert de point destiné à la rupture, caractérisé en ce qu'un boulon d'écartement (7) est vissé sur le châssis de support (2) et est guidé à travers l'alésage (3.1) de la plaque de fixation (1.2), en ce qu'une douille en cuivre (8) est enfilée sur le boulon d'écartement (7) et est appuyée contre le châssis de support (2), en ce que, à l'extrémité libre de la douille de cuivre (8), le boulon d'écartement (7) est élargi de façon biseautée et en ce que la rondelle (6) avec la vis de fixation (5) est vissée sur le boulon d'écartement (7).

2. Dispositif selon la revendication 1, caractérisé en ce que la plaque de fixation (1.2) avec des vis de réglagle (9) peut être appuyée contre une plaque de fixation supplémentaire (1.1).

3. Dispositif selon la revendication 1, caractérisé en ce que la douille en cuivre (8) est disposée étroitement autour du boulon d'écartement (7).

4. Dispositif selon les revendications 1 et 3, caractérisé en ce que la longueur de la douille en cuivre (8) correspond à une force de mandrinage de 650 Kp.

Fig. 1

Fig.2

Fig.3